(19) Europäisches Patentamt / European Patent Office / Office européen des brevets

(11) **EP 4 593 096 B1**

(12) **EUROPEAN PATENT SPECIFICATION**

(45) Date of publication and mention
of the grant of the patent:
**11.03.2026  Bulletin 2026/11**

(51) International Patent Classification (IPC):
**H01M 4/04** *(2006.01)*    H01M 4/139 *(2010.01)*
**B30B 3/04** *(2006.01)*

(21) Application number: **24193588.1**

(52) Cooperative Patent Classification (CPC):
**H01M 4/0435; H01M 4/139;** H01M 4/0404;
H01M 4/0409; Y02E 60/10

(22) Date of filing: **08.08.2024**

(54) **APPARATUS AND METHOD FOR MANUFACTURING SECONDARY BATTERY ELECTRODE PLATES**

VORRICHTUNG UND VERFAHREN ZUR HERSTELLUNG VON ELEKTRODENPLATTEN FÜR SEKUNDÄRBATTERIE

APPAREIL ET PROCÉDÉ DE FABRICATION DE PLAQUES D'ÉLECTRODE DE BATTERIE SECONDAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.01.2024  KR 20240013503**

(43) Date of publication of application:
**30.07.2025  Bulletin 2025/31**

(73) Proprietor: **Samsung SDI Co., Ltd.
Yongin-si, Gyeonggi-do 17084 (KR)**

(72) Inventors:
 • **Lee, Giwook**
   **Yongin-si, Gyeonggi-do 17084 (KR)**
 • **Lee, Junghyun**
   **Yongin-si, Gyeonggi-do 17084 (KR)**
 • **Park, Jeongyi**
   **Yongin-si, Gyeonggi-do 17084 (KR)**
 • **Kwak, JunHyeok**
   **Yongin-si, Gyeonggi-do 17084 (KR)**
 • **Kim, Hyunchul**
   **Yongin-si, Gyeonggi-do 17084 (KR)**
 • **Park, Hyemin**
   **Yongin-si, Gyeonggi-do 17084 (KR)**

(74) Representative: **Gulde & Partner
Patent- und Rechtsanwaltskanzlei mbB
Berliner Freiheit 2
10785 Berlin (DE)**

(56) References cited:
 WO-A1-2023/085796     DE-A1- 102021 210 784
 DE-B3- 102021 206 617    JP-A- 2022 139 918
 US-A1- 2020 295 378

**Description**

**BACKGROUND**

**1. Field**

Aspects of embodiments of the present disclosure relate to an apparatus and method for manufacturing secondary battery electrode plates and a roller used in the apparatus and method.

**2. Description of the Related Art**

Different from primary batteries, which are not designed to be charged, secondary batteries are designed to be discharged and recharged. Generally, a secondary battery includes an electrode assembly including a positive electrode plate, a negative electrode plate, and a separator, and an enclosure (e.g., a casing or can) accommodating the electrode assembly. The electrode assembly may be classified into a wound electrode assembly or a laminated electrode assembly depending on the type of stacking of the electrode plates and separator. The wound electrode assembly may be in the form of a jelly roll, and the laminated electrode assembly may be in the form of a stack.

The positive and negative electrode plates of the electrode assembly may be manufactured by coating a substrate with a slurry comprising an electrode active material, rolling an electrode plate coated with the slurry, and then slitting the rolled electrode plate longitudinally (e.g., in a transfer direction of the electrode plate). DE 10 2021 210784 A, which forms the basis for the preamble of claim 1 and claim 11, discloses a method and a system for producing an electrode layer, i.e. an anode layer or a cathode layer, for a lithium-ion battery cell. The system performs a coating process, a calendering process and a slitting process, wherein the system includes several transfer rolls for transferring the precursor of the electrode layer. WO 2023/085796 A1 discloses a travelling roll with different diameter. DE 10 2021 206617 B3 discloses a device for producing an electrode arrangement for a lithium-ion battery cell, where a calender roll is applied with heat during calendering. JP 2022 139918 A discloses another roll-pressing apparatus.

In the process of manufacturing secondary batteries, during a pressing (e.g., rolling) process, an uncoated part and a coated part of the electrode plate may exhibit a difference in elongation due to the difference in height (or thickness) between the uncoated part and the coated part, causing stress in the electrode plate. During a subsequent slitting process, when the electrode plate is slit, the stress may be unevenly distributed due to the reduction in its width, resulting in asymmetric deformation, such as curvature or skew in a slit electrode plate.

This issue may occur not only in the uncoated part and the coated part of the slit electrode plate but also in electrode plates in other processes. In addition, this issue may occur not only in the uncoated part/coated part but also in any electrode plate that includes various parts (or portions) with different thicknesses, such as a thin part (hereinafter, a first thickness part) and a thick part (hereinafter, a second thickness part).

The above information disclosed in this Background section is for enhancement of understanding of the background of the present disclosure, and therefore, it may contain information that does not constitute related (or prior) art.

**SUMMARY**

Embodiments of the present disclosure provide an improved roller (including both a drive roller and an idle roller) that transfers a slit electrode plate, a coated electrode plate or a rolled electrode plate having a coated part and an uncoated part or an electrode plate having parts with different thicknesses manufactured in other processes. According to embodiments of the present disclosure, deformation of electrodes is alleviated or avoided by making a diameter of a roller portion in contact with a first thickness part or uncoated part of an electrode plate to be larger than a diameter of a roller portion in contact with a second thickness part (that is thicker than the first thickness part) or coated part of the electrode plate and allowing a larger external force to act on the first thickness part or the uncoated part to cause additional elongation of the first thickness part or uncoated part.

According to the invention, an apparatus for manufacturing secondary battery electrode plates is provided according to the appended set of claims.

According to an embodiment, the electrode plate transferred by the roller has a first thickness part and a second thickness part that is thicker than the first thickness part, and wherein the electrode plate is configured such that the first thickness part is in contact with the first diameter part of the roller, the second thickness part is in contact with the second diameter part of the roller, and a boundary part between the first thickness part and the second thickness part is in contact with the inclined part.

According to an embodiment, the electrode plate transferred by the roller is the slit electrode plate slit by the slitting unit, wherein the first thickness part is an uncoated part of the electrode plate, and wherein the second thickness part is a coated part of the electrode plate.

According to an embodiment, the electrode plate transferred by the roller has a first thickness part, a second thickness part that is thicker than the first thickness part, and a third thickness part between the first thickness part and the second thickness part, and

According to an embodiment, the electrode plate is configured such that the first thickness part is in contact with the first diameter part of the roller, the second thickness part is in contact with the second diameter part of the roller, and the third thickness part is in contact with the inclined part of the roller.

According to an embodiment, the electrode plate transferred by the roller is the slit electrode plate slit by the slitting unit, wherein the first thickness part is an uncoated part of the electrode plate, wherein the second thickness part is a coated part of the electrode plate, and wherein the third thickness part is an insulating part of the electrode plate.

According to an embodiment, the inclined part of the roller has an angle of inclination in a range from 5° to 20°.

According to an embodiment, the inclined part of the roller has a length in a range from 1 mm to 3 mm.

According to an embodiment, a difference between radii of the first and second diameter parts of the roller is in a range from 100 μm to 350 μm.

According to an embodiment, the first and second diameter parts of the roller have different surface roughnesses.

According to an embodiment not covered by the present invention, a friction force between the first diameter part of the roller and the electrode plate in contact therewith is different from a friction force between the second diameter part of the roller and the electrode plate in contact therewith.

According to another aspect of the invention, a method of manufacturing secondary battery electrode plates is provided according to the appended set of claims. The method includes: coating an electrode material slurry on a substrate; rolling the coated electrode plate; slitting the rolled electrode plate in a transfer direction (or moving direction) of the electrode plate, and transferring, by a roller, one of the coated electrode plate, the rolled electrode plate, and the slit electrode plate with the roller in contact with the associated electrode plate. The roller in contact with the electrode plate has a first diameter part having a first diameter, a second diameter part having a smaller diameter than the first diameter part, and an inclined part extending between the first diameter part and the second diameter part. The electrode plate transferred by the roller has a first thickness part that is in contact with the first diameter part of the roller, a second thickness part that is in contact with the second diameter part of the roller and is thicker than the first thickness part, and a boundary part between the first thickness part and the second thickness part that is in contact with the inclined part of the roller.

According to an embodiment, the electrode plate transferred by the roller has a first thickness part and a second thickness part that is thicker than the first thickness part, and wherein the electrode plate is configured such that the first thickness part is in contact with the first diameter part of the roller, the second thickness part is in contact with the second diameter part of the roller, and a boundary part between the first thickness part and the second thickness part is in contact with the inclined part.

According to an embodiment, the electrode plate transferred by the roller is the slit electrode plate slit by the slitting unit, wherein the first thickness part is an uncoated part of the electrode plate, and wherein the second thickness part is a coated part of the electrode plate.

According to an embodiment, the electrode plate transferred by the roller has a first thickness part, a second thickness part that is thicker than the first thickness part, and a third thickness part between the first thickness part and the second thickness part, and

According to an embodiment, the electrode plate is configured such that the first thickness part is in contact with the first diameter part of the roller, the second thickness part is in contact with the second diameter part of the roller, and the third thickness part is in contact with the inclined part of the roller.

According to an embodiment, the electrode plate transferred by the roller is the slit electrode plate slit by the slitting unit, wherein the first thickness part is an uncoated part of the electrode plate, wherein the second thickness part is a coated part of the electrode plate, and wherein the third thickness part is an insulating part of the electrode plate.

In some embodiments, the electrode plate transferred by the roller may have a first thickness part that is in contact with the first diameter part of the roller, a second thickness part that is in contact with the second diameter part of the roller and is thicker than the first thickness part, and a boundary part between the first thickness part and the second thickness part that is in contact with the inclined part of the roller. The electrode plate may be the slit electrode plate slit by the slitting unit, the first thickness part may be an uncoated part of the slit electrode plate, and the second thickness part may be a coated part of the slit electrode plate.

In some embodiments, a roller used to manufacture secondary battery electrode plates is provided. The roller is in contact with an electrode plate to transfer the electrode plate. The roller has a first diameter part having a first diameter, a second diameter part having a smaller diameter than the first diameter part, and an inclined part extending between the first diameter part and the second diameter part.

According to embodiments of the present disclosure, a drive roller or an idle roller for transferring the electrode plate has a large diameter part and a small diameter part to position and transfer the electrode plate such that the first thickness part or uncoated part of the electrode plate is in contact with the large diameter part and the second thickness part, which is thicker than the first thickness part, or coated part of the electrode plate is in contact with the small diameter part. Accordingly, deformation of the electrode plate, such as curvature or skew, may be avoided or mitigated by primarily applying pressure to the first thickness part or the uncoated part, the elongation of which is smaller (or less) compared to the coated part, to increase the amount of elongation and reduce the difference in elongation between the first thickness part or the uncoated part and the second thickness part or the coated part. In addition, the roller has an inclined part between the large diameter part and the small diameter part thereof. Accordingly, it is possible to reduce damage to the boundary part between the first thickness part or the uncoated part and the second thickness part or the coated part by allowing the boundary part between the first thickness part or the uncoated part and the second thickness part or the coated part to be in contact with the inclined part.

However, aspects and features of the present disclosure are not limited to those described above, and other aspects and features not mentioned herein will be clearly understood by a person skilled in the art from the detailed description, described below.

**BRIEF DESCRIPTION OF THE DRAWINGS**

The following drawings attached hereto illustrate embodiments of the present disclosure and are provided to further describe aspects and features of the present disclosure together with the detailed description of the present disclosure. Thus, the present disclosure should not be construed as being limited to the drawings, in which:

FIG. 1 schematically illustrates an electrode assembly of a secondary battery;
FIG. 2 schematically illustrates a pouch-type secondary battery;
FIG. 3 is a cross-sectional view of a cylindrical secondary battery;
FIG. 4 is a cross-sectional view showing an internal configuration of a prismatic secondary battery;
FIG. 5 is a schematic diagram describing a process of manufacturing an electrode plate of the electrode assembly illustrated in FIG. 1;
FIG. 6 is a schematic diagram illustrating a slitting unit and transfer units for transferring slit electrode plates to rewinders;
FIG. 7 is a view schematically illustrating one slit electrode plate at where a coated layer and an uncoated layer coexist;
FIG. 8 is a perspective view illustrating one roller according to an embodiment of the present disclosure;
FIG. 9 is a view schematically illustrating a state in which the slit electrode plate is transferred by the roller shown in FIG. 8;
FIG. 10 schematically illustrates a state in which a slit electrode plate is transferred by two rollers according to another embodiment of the preset disclosure;
FIG. 11 schematically illustrates a state in which the electrode plate with an insulating layer applied to an uncoated part is transferred by the roller;
FIG. 12 illustrates main dimensions of the shape of the roller shown in FIG. 8;
FIG. 13 is a view of a secondary battery module in which secondary batteries are arranged according to embodiments of the present disclosure;
FIG. 14 is a view of a secondary battery pack including the secondary battery module illustrated in FIG. 13; and
FIG. 15 is a conceptual view illustrating a vehicle equipped with the secondary battery pack illustrated in FIG. 14.

**DETAILED DESCRIPTION**

The embodiments described in this specification and the configurations shown in the drawings are only some embodiments of the present disclosure and do not represent all of the embodiments of the present disclosure. Accordingly, it should be understood that there may be various equivalents and modifications that can replace or modify one or more embodiments described herein at the time of filing this application within the scope defined by the appended claims.

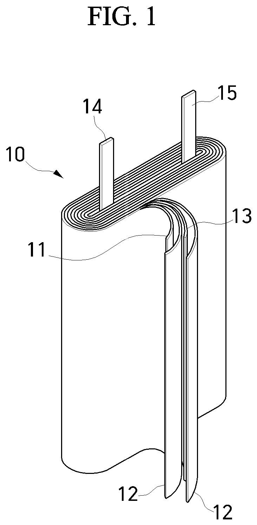

FIG. 1 shows an electrode assembly of a secondary battery.

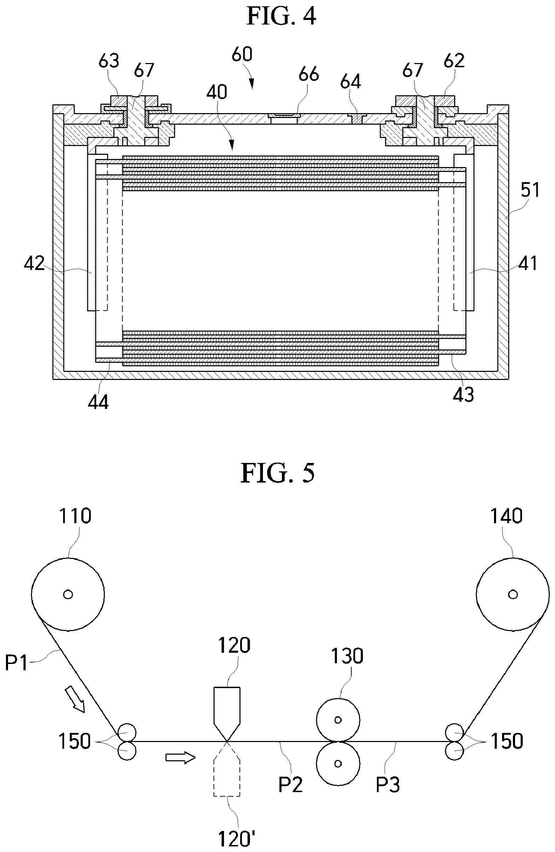

An electrode assembly 10 may be formed by winding or stacking a stack of a first electrode plate 11, a separator 12, and a second electrode plate 13, which are formed as thin plates or films. When the electrode assembly 10 is a wound stack, a winding axis may be parallel to the longitudinal direction of the case 51 (see, e.g., FIG. 4). In other embodiments, the electrode assembly 10 may be a stack type rather than a winding type, but the shape of the electrode assembly 10 is not limited in the present disclosure. In addition, the electrode assembly 10 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate 11 of the electrode assembly 10 may act as a negative electrode, and the second electrode plate 13 may act as a positive electrode. Of course, the reverse is also possible.

The first electrode plate 11 may be formed by applying a first electrode active material, such as graphite or carbon, to a first electrode current collector formed of a metal foil, such as copper, a copper alloy, nickel, or a nickel alloy. The first electrode plate 11 may include a first electrode tab 14 (e.g., a first uncoated portion) that is a region to which the first electrode active material is not applied. The first electrode tab 14 may be connected to an external first terminal. In some embodiments, when the first electrode plate 11 is manufactured, the first electrode tab 14 may be formed by being cut in advance to protrude to one side of the electrode assembly 10, or the first electrode tab 14 may protrude to one side of the electrode assembly 10 more than (e.g., farther than or beyond) the separator 12 without being separately cut.

The second electrode plate 13 may be formed by applying a second electrode active material, such as a transition metal oxide, on a second electrode current collector formed of a metal foil, such as aluminum or an aluminum alloy. The second electrode plate 13 may include a second electrode tab 15 (e.g., a second uncoated portion) that is a region to which the second electrode active material is not applied. The second electrode tab 15 may be connected to an external second terminal. In some embodiments, the second electrode tab 15 may be formed by being cut in advance to protrude to the one side of the electrode assembly 10 when the second electrode plate 13 is manufactured, or the second electrode plate 13 may protrude to the one side of the electrode assembly more than (e.g., farther than or beyond) the separator 12 without being separately cut.

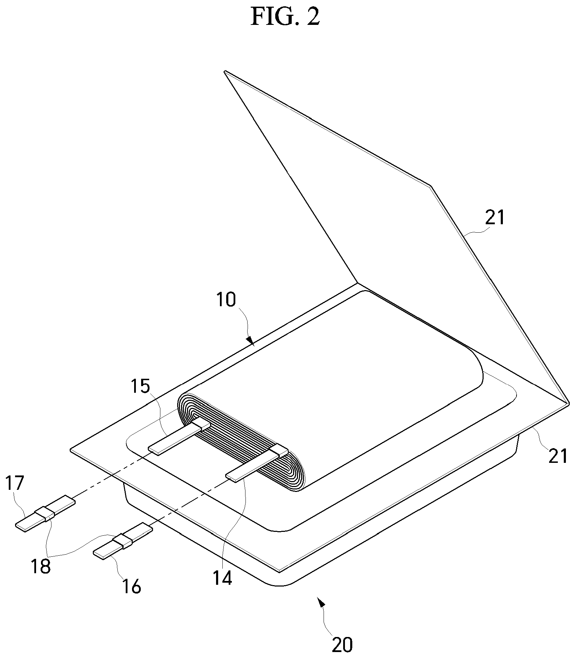

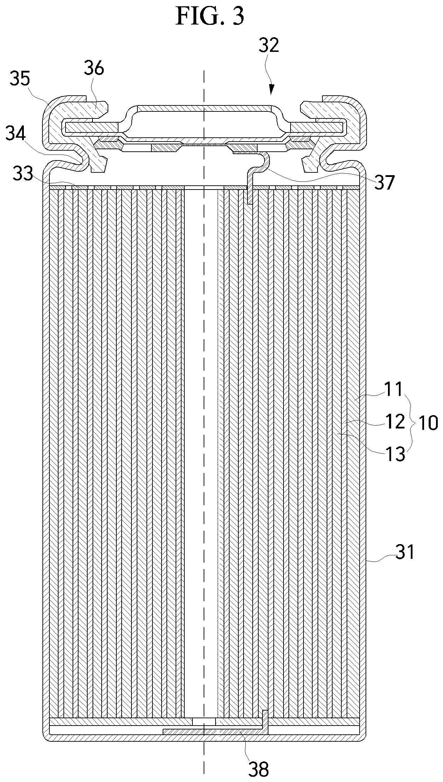

In some embodiments, the first electrode tab 14 and the second electrode tab 15 may be located on opposite sides of the electrode assembly 10 (see, e.g., FIGS. 3 and 4). In other embodiments, the first electrode tab 14 and the second electrode tab 15 may be located on one side of the electrode assembly 10 in the same direction (see, e.g., FIGS. 1 and 2).

The separator 12 prevents a short-circuit between the first electrode 11 and the second electrode 13 while allowing for movement of lithium ions therebetween. The separator 12 may be made of, for example, a polyethylene film, a polypropylene film, a polyethylene-polypropylene film, or the like.

In some embodiments, the electrode assembly 10 may be accommodated in a case along with an electrolyte.

In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 4).

FIG. 2 schematically illustrates the pouch-type secondary battery.

The pouch-type secondary battery includes an electrode assembly 10 and a pouch 20 accommodating the electrode assembly 10.

The electrode assembly 10 is the same as that illustrated in FIG. 1. The first electrode tab 14 and the second electrode tab 15 of the electrode assembly 10 may be electrically connected to respective external first and second terminal leads 16 and 17 by welding. Each of the first terminal lead 16 and the second terminal lead 17 may be attached with (e.g., covered by) a tab film 18 for insulation from the pouch 20.

The pouch 20 may be sealed by having sealing parts 21 at the edges thereof which contact each other while accommodating the electrode assembly 10 and with the tab film 18 interposed between the sealing parts 21. The sealing parts 21 of the pouch 20 may each be made of a thermal fusion material that generally has weak adhesion to metal. Thus, the first electrode tab 14 and the second electrode tab 15 may be fused to the pouch 20 by interposing the thin tab 18 between the sealing parts 21.

FIG. 3 illustrates a cylindrical secondary battery. Referring to FIG. 3, a secondary battery may include an electrode assembly 10, a case 31 accommodating the electrode assembly 10 and an electrolyte therein, a cap assembly 32 coupled to an opening in the case 31 to seal the case 31, and an insulating plate 33 positioned between the electrode assembly 10 and the cap assembly 32 inside the case 31.

The case 31 accommodates the electrode assembly 10 and the electrolyte, and, together with the cap assembly 32, forms the external appearance of the secondary battery. The case 31 may have a substantially cylindrical body portion and a bottom portion connected to one side (e.g., to one end) of the body portion. A beading part 34 (e.g., a bead) deformed inwardly may be formed in the body portion, and a crimping part 35 (e.g., a crimp) bent inwardly may be formed at an open end of the body portion.

The beading part 34 can reduce or prevent movement of the electrode assembly 10 inside the case 31 and can facilitate seating of a gasket 36 and the cap assembly 32. The crimping part 35 may firmly fix the cap assembly 32 by pressing the edge of the case 31 against the gasket 36. The case 31 may be formed of iron plated with nickel, for example.

The cap assembly 32 may be fixed to the inside of the crimping part 35 by the gasket 36 to seal the case 31.

A first lead tab 37 drawn out from (e.g., extending from) the electrode assembly 10 may be connected to the cap assembly 32, and a second lead tab 38 drawn out from (e.g., extending from) the electrode assembly 10 may be electrically connected to the bottom of the casing 31.

FIG. 4 shows the internal structure of a prismatic secondary battery.

As shown in FIG. 4, a prismatic secondary battery may include an electrode assembly 40, a first current collector 41, a first terminal 62, a second current collector 42, a second terminal 63, a case 51, and a cap assembly 60.

The electrode assembly 40 may be formed by winding or stacking a stack of a first electrode plate, a separator, and a second electrode plate, which are formed as thin plates or films. If the electrode assembly 40 is a wound stack, a winding axis may be parallel to the longitudinal direction of the case 51. In other embodiments, the electrode assembly 40 may be a stack type rather than a winding type, but the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

In some embodiments, the first electrode tab 14 and the second electrode tab 15 may be located on opposite sides of the electrode assembly 10 (see, e.g., FIGS. 3 and 4). In other embodiments, the first electrode tab 14 and the second electrode tab 15 may be located on one side of the electrode assembly 10 in the same direction (see, e.g., FIGS. 1 and 2).

In the electrode assembly 40, the first current collector 41 and the second current collector 42 may be welded and connected to the first electrode tab 43 extending from the first electrode plate and the second electrode tab 44 extending from the second electrode plate, respectively. As mentioned above, in some embodiments in which the first electrode tab 43 and the second electrode tab 44 are located at the top of the electrode assembly 40, the first and second current collectors would be located at the top of the electrode assembly 40.

As illustrated in FIG. 4, the first current collector 41 and the second current collector 42 are connected to the first terminal 62 and the second terminal 63 through connection members 67, respectively. In some embodiments, the connection members 67 may each have an outer peripheral surface that is threaded and may be fastened to the first terminal 62 and the second terminal 63 by screwing. However, the present disclosure is not limited thereto. For example, the connection members 67 may also be coupled to the first terminal 62 and the second terminal 63 by riveting or welding.

FIG. 5 is a schematic diagram describing a process for manufacturing an electrode plate (e.g., the first electrode plate 11 or the second electrode plate 13) of the electrode assembly 10 illustrated in FIG. 1.

A supply roll 110 is a roll on which a substrate P1 for an electrode plate is wound. When an apparatus for manufacturing electrode plates, according to an embodiment of the present disclosure, is used to manufacture a positive electrode plate, the substrate P1 may be a metal foil comprising aluminum (Al), for example. When the apparatus for manufacturing electrode plates, according to an embodiment of the present disclosure, is used to manufacture a negative electrode plate, the substrate P1 may be a metal foil comprising copper (Cu) and/or nickel (Ni).

A transfer roller 150 may be an idle roller that guides the substrate P1 after it is unwounded from the supply roll 110 or a drive roller that applies a pulling force to allow the substrate P1 to be unwound from the supply roll 110. FIG. 5 illustrates an embodiment including a total of four transfer rollers 150 as an example, but the number and positions of transfer rollers may be varied.

A coating unit 120 forms a coating layer by coating the substrate P1 with an electrode material slurry that is previously prepared. The slurry may include an active material. When the apparatus for is used to manufacture the positive electrode plate, the slurry may be prepared with an active material including a transition metal oxide, a binder, a volatile solvent, and the like, for example. When the apparatus is used to manufacture the negative electrode plate, the slurry may be prepared with an active material including a transition metal oxide, a binder, a solvent, or the like. Moreover, both surfaces (e.g. the upper and lower surfaces) of the substrate P1 may be coated concurrently (or simultaneously) by adding a second coating unit 120'. The second coating unit 120' may have the same configuration as the coating unit 120, to the lower surface of the substrate P1.

A rolling unit (e.g., a roll-pressing unit) 130 uses pressing rollers to compresses an electrode plate P2 coated with the slurry (mixture) by the coating unit 120 to produce a high-capacity and high-density secondary battery.

A winding roll 140 is a roll that winds and accommodates an electrode plate P3 coated and rolled by the coating unit 120 and the rolling unit 130.

A drying unit may be added between the coating unit 120 and the winding roll 140 to dry or solidify the electrode plate P2 coated with the slurry. The drying unit may include a heating device. In addition, the drying unit may be physically separated from or otherwise functionally integrated into the rolling unit 130. For example, when the rolling unit 130 is configured in the form of a roller, the roller may be equipped with a heating device to concurrently (or simultaneously) heat and roll the coating layer, thereby allowing the rolling unit 130 to be configured to also act as a drying unit.

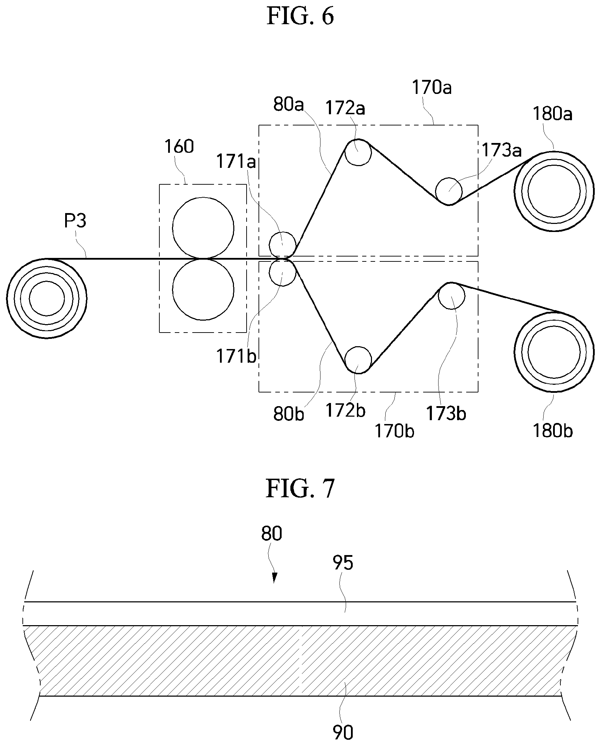

FIG. 6 is a schematic diagram illustrating a slitting unit 160 that slits the electrode plate P3 rolled by the rolling unit 130 and wound on the winding roll 140, as shown in FIG. 5, longitudinally (e.g., in a moving direction of the electrode plate) and transfer units 170a and 170b for transferring slit electrode plates 80a and 80b to respective rewinders 180a and 180b.

Two electrode plates 80a and 80b, which are slit (e.g., cut in the longitudinal direction of the electrode plate, that is, in the moving direction of the electrode plate) and separated by the slitting unit 160 and may be transferred to and rewound on the rewinders 180a and 180b through a plurality of rollers 171a to 173a and 171b to 173b included in the transfer units 170a and 170b, respectively.

The slitting unit 160 slits the electrode plate P3, which is coated and rolled in the process described with reference to FIG. 5, along a line of cutting plane parallel to the direction of transfer to separate the electrode plate P3 into individual rows. When subjecting to this slitting process, a slit electrode plate 80 may be obtained in the form of a strip where there coexist (e.g., having both) a coated part 90 having a second thickness with a coating layer formed thereon and an uncoated part 95 having a first thickness smaller than the second thickness with no coating layer formed thereon, as illustrated in FIG. 7.

The slitting unit 160, the transfer units 170a and 170b, and the rewinders 180a and 180b may be arranged in a continuous line behind (or after) the rolling unit 130 shown in FIG. 5 or may be organized into a separate production line, as illustrated in FIG. 6. In the latter embodiment, the electrode plate P3 obtained by rolling the coated electrode plate P2 through the production line illustrated in FIG. 5 may be wound on the winding roll 140 and transferred to the separately organized slitting line as illustrated in FIG. 6. Then, in the slitting line, the electrode plate P3 may be unwound from the winding roll 140 and slit in the direction of transfer of the electrode plate P3 by the slitting unit 160.

Because the part rolled by the rolling unit 130 is primarily the thick coated part, a difference in elongation may occur between the coated part and the uncoated part due to a greater amount of elongation by rolling in the coated part than in the uncoated part. In this case, the electrode plate does not deform because the electrode plate has a relatively large width before slitting and the stress generated due to the difference in elongation is distributed on (or through) the electrode plate. However, deformation of the electrode plate, such as curvature or a skew, may be occur in the electrode plate 80 that is slit through the slitting process because it has a small width and the stress generated due to the difference in elongation between the coated part 90 and the uncoated part 95 is not smoothly (or evenly) distributed on (or through) the electrode plate as illustrated in FIG. 7. If the electrode plate 80 is continuously deformed, the electrode plate 80 may break during the subsequent process of assembly, such as winding or notching.

To reduce or minimize electrode deformation, a method to increase ductility (weakening tensile strength) by applying induction heat annealing (IHA) may be applied to the uncoated part 95 to increase the amount of elongation of the uncoated part in the pressing process. However, because the degree of compression in the rolling process increases and the difference in elongation between the coated part 90 and the uncoated part 95 increases with the trend of producing electrodes with high energy density, there is a need for an additional (or alternative) method of reducing electrode deformation.

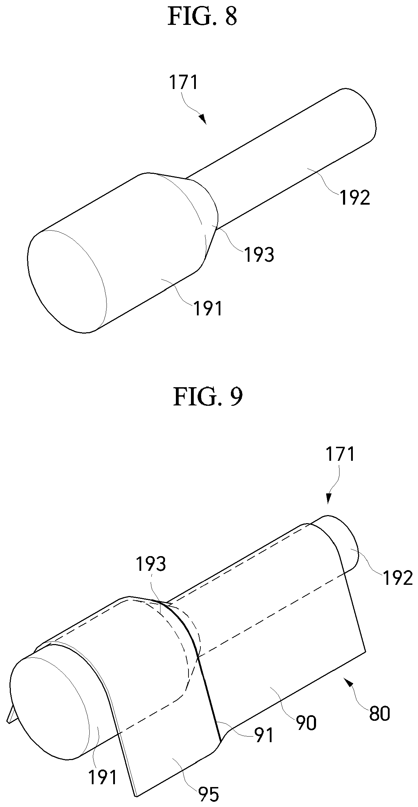

FIG. 8 illustrates a roller 171 from among the plurality of rollers included in the transfer units 170a and 170b according to embodiments of the present disclosure. The roller 171 may be a drive roller or an idle roller. The roller 171 includes two parts having different diameters including a large diameter part 191 and a small diameter part 192 with an inclined part 193 extending between the large diameter part 191 and the small diameter part 192. Hereinafter, the large diameter part 191 will be referred to as a first diameter part, and the small diameter part 192 will be referred to as a second diameter part. The second diameter part 192 has a smaller diameter than the first diameter part 191.

FIG. 9 is a view schematically illustrating a state in which the slit electrode plate 80 is transferred by the roller 171. The following embodiment will be described in the context of alleviating or preventing deformation, such as curvature or skew, of the slit electrode plate 80 including the coated part 90 and the uncoated part 95, but the aspects and features of the present disclosure are not limited thereto. For example, the electrode plate may refer to electrode plates manufactured through other processes, such as coating, pressing, and drying, as well as the slit electrode plate 80, and may also include an electrode plate having portions with different thicknesses as well as the electrode plate including the uncoated part and the coated part.

When the electrode plate 80 is transferred by the roller 171, the electrode plate 80 may be positioned such that the uncoated part 95 is in contact with the first diameter part 191, the coated part 90 is in contact with the second diameter part 192, and the boundary part 91 between the uncoated part 95 and the coated part 90 is in contact with the inclined part 193. Because the uncoated part 95 is transferred in contact with the first diameter part 191, pressure is primarily applied to the uncoated part 95, the elongation of which is less compared to the coated part 90, thereby generating additional elongation. Thus, the difference in elongation between the uncoated part 95 and the coated part 90 may be reduced such that deformation of the electrode plate 80, such as curvature or skew, can be reduced or avoided.

The boundary part 91 between the coated part 90 and the uncoated part 95 is located on the inclined part 193, which has a diameter that gradually decreases between the first diameter part 191 and the second diameter part 192 of the roller 171, which may alleviate pressure applied to and bending at the boundary part 91 between the coated part 90 and the uncoated part 95. Therefore, damage to the electrode plate may be prevented. Because the inclined part 193 has a tapered diameter, the boundary part 91 between the coated part 90 and the uncoated part 95 does not necessarily have to coincide (or exactly coincide) with the starting point of the inclined part 193.

In some embodiments, the roller 171 may be manufactured such that the friction force between the uncoated part 95 of the electrode plate 80 and the first diameter part 191 of the roller 171 is different from the friction force between the coated part 90 and the second diameter part 192. For example, the first diameter part 191 and the second diameter part 192 may be formed (or processed) such that a surface friction force of the second diameter part 192 in contact with the coated part 90 is greater than a surface friction force of the first diameter part 191 in contact with the uncoated part 95. This difference in frictional force can prevent the electrode plate 80 from slipping due to the difference in pressure applied to the coated part 90 and the uncoated part 95 by the different diameters of the first diameter part 191 and the second diameter part 192 when the electrode plate 80 is transferred by the roller 171.

According to embodiments, to provide a friction force between the first diameter part 191 and the uncoated part 95 that is different than a friction force between the second diameter part 192 and the coated part 90, the surface roughness of the first diameter part 191 may be different from that of the second diameter part 192. For example, the surface of the second diameter part 192 may be processed to be rougher than the surface of the first diameter part 191.

According to another embodiment, to provide a friction force between the first diameter part 191 and the uncoated part 95 that is different from a friction force between the second diameter part 192 and the coated part 90, the first diameter part 191 and the second diameter part 192 may be made of different materials. For example, the second diameter part 192 may be made of a material with a higher friction force, and the first diameter part 191 may be made of a material with a relatively low friction force.

According to another embodiment, to provide a friction force between the first diameter part 191 and the uncoated part 95 that is different from a friction force between the second diameter part 192 and the coated part 90, coating layers with different friction forces may be formed on the first diameter part 191 and the second diameter part 192. For example, a coating layer with a higher friction force may be formed on the second diameter part 192, and a coating layer with a relatively low friction force may be formed on the first diameter part 191.

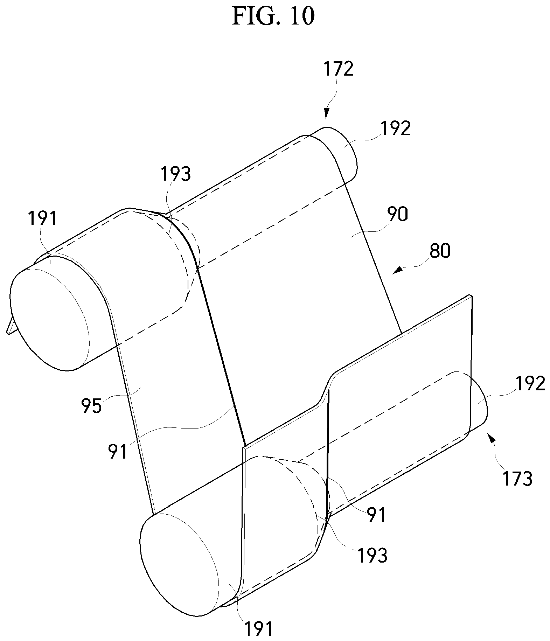

FIG. 10 schematically illustrates a state in which an electrode plate 80 is transferred by (or between) two rollers 172 and 173. To avoid problems, such as an insufficient amount of elongation of the uncoated part 95 or bending of the electrode plate 80 to only one side when the electrode plate 80 is transferred by one roller 171 in the embodiment shown in FIG. 9, a plurality of rollers 172 and 173 may be used, each having the same shape as illustrated in FIG. 8.

When two or more rollers are used as shown in FIG. 10, the different surfaces (e.g., opposite surfaces) of the electrode plate 80 may be in contact with the respective rollers. For example, the electrode plate 80 may be transferred with the first surface thereof in contact with the first roller 172 and the second surface thereof in contact with the second roller 173. This arrangement can prevent or avoid bending of the electrode plate 80 to only one side. In addition, because the electrode plate 80 is transferred by the two rollers 172 and 173, the amount of elongation of the uncoated part 95 may be doubled.

In the process of coating the electrode plate (see, e.g., FIG. 5), an insulating part (or an insulating layer) may sometimes be formed by applying an insulating layer to some regions of the uncoated part. The insulating part may be formed longitudinally having a width (e.g., a predetermined width) at the boundary between the uncoated part and the coated part. The insulating part may have a third thickness that is equal to or different from the thickness of the uncoated part and the coated part.

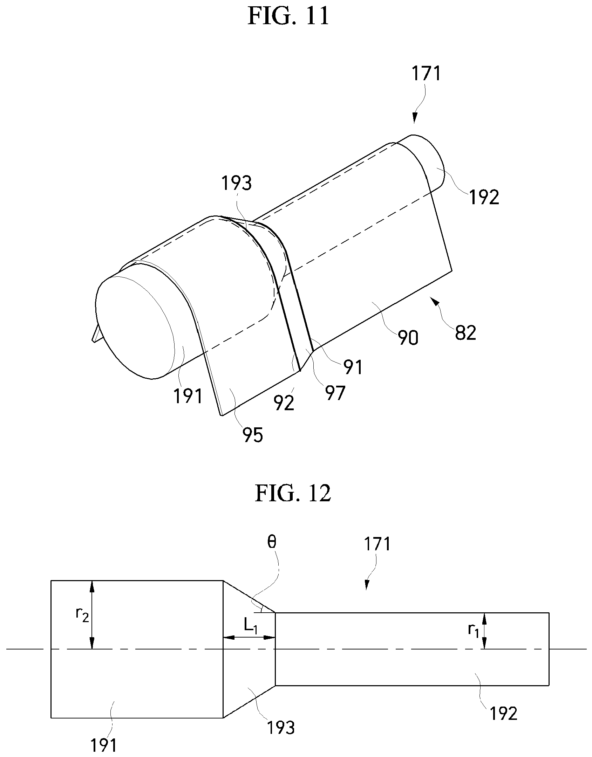

FIG. 11 illustrates a state in which an electrode plate 82 with an insulating part 97 formed on an uncoated part 95 is transferred by the roller 171 according to an embodiment of the present disclosure. The insulating part 97 is formed with a width on (or over) the uncoated part 95 of the electrode plate 82. A boundary part 91 between the coated part 90 and the uncoated part 95 and a boundary part 92 between the uncoated part 95 and the insulating part 97 are illustrated.

In this electrode plate 82, the insulating part 97 may be located on (e.g., arranged on) the inclined part 193 of the roller 171. The boundary part 91 between the coated part 90 and the uncoated part 95 and a boundary part 92 between the uncoated part 95 and the insulating part 97 may be located at least at the starting and ending points of the inclined part 193.

FIG. 12 illustrates dimensions defining a shape of each roller 171, 172, or 173 according to embodiments of the present disclosure. In FIG. 12, $r_1$ refers to a radius of the second diameter part 192, $r_2$ refers to a radius of the first diameter part 191, $L_1$ refers to a length of the inclined part 193, and $\theta$ refers to an angle of inclination of the inclined part 193 (e.g., an angle with respect to the longitudinal outer surface of the first or second diameter part 191 or 192).

The roller 171 may be designed having the main dimensions defining the shape thereof in consideration of various factors. The factors to be considered may include whether or not the coating of the electrode plate is a single-sided coating or a double-sided coating. In addition, the insulating part 97 that may be added to a portion of the width of the uncoated part 95, as described above, may be one of the factors to be considered when designing the roller 171.

The following Table 1 shows experimental data conducted by the inventor to obtain the basis for designing the shape of the roller 171. The improvement rate of curvature or skew of the electrode plate 80 was calculated by changing the presence or absence of the insulating part 97, the angle of the inclined part 193, and the length of the inclined part 193. The improvement rate of curvature or skew m may be calculated by using the following Equation. In the Equation below, $m_1$ is a curvature or skew value of the existing electrode plate, and $m_2$ is a curvature or skew value of the electrode plate when applying the shape of the roller according to embodiments of the present disclosure:

$$m(\%) = \frac{m_1 - m_2}{m_1} \times 100$$

[Table 1]

| PRESENCE/ABSENCE OF INSULATING LAYER | ANGLE OF INCLINATION θ(°) | LENGTH OF INCLINED PART L1(mm) | IMPROVEMENT RATE | | NOTE |
|---|---|---|---|---|---|
| | | | CURVATURE | SKEW | |
| X | 1 | 3 | -19.3 | -58.8 | CURVATURE/SKEW INTENSIFIED |
| X | 5 | 3 | 40.0 | 30.9 | |
| 0 | 1 | 1.5 | -54.0 | 16.9 | ONLY SKEW IMPROVED |
| 0 | 2 | 1.5 | 34.1 | 40.2 | |
| 0 | 3 | 1.5 | 40.0 | 45.4 | |
| 0 | 10 | 1.5 | 56.0 | 65.2 | |
| 0 | 15 | 1.5 | 72.0 | 72.5 | |
| 0 | 25 | 1.5 | 84.0 | 84.1 | BREAKAGE OCCURS |
| 0 | 20 | 1 | 93.3 | 93.1 | |
| 0 | 10 | 1 | 94.3 | 64.9 | |

In the result of experiment, in the case of the electrode plate 80 without the insulating part 97, the improvement rate of curvature was 40.0% and the improvement rate of skew was 30.9% when $L_1$ was 3 mm and θ was 5°, and the curvature and the skew were intensified when θ was 1°.

In the case of the electrode plate 82 with the insulating part 97, when $L_1$ was 1.5 mm, the improvement rate of curvature and skew generally increased as θ was increased. However, the curvature was intensified and only the skew was improved when θ was 1°, and the electrode plate 82 was broken during transfer when θ was 25° (that is, when the difference between the first diameter part 191 and the second diameter part 192 was relatively large). After the breakage occurred, $L_1$ was changed to 1 mm. Accordingly, the improvement rates of curvature and skew were 93.3% and 93.1%, respectively, when θ was 20°, and the improvement rates of curvature and skew were 94.3% and 64.9%, respectively, when θ was 10°.

Based on this experimental data, the shape of each roller 171, 172, or 173 can be designed according to embodiments of the present disclosure including at least one of the properties 1) - 3) and/or combinations thereof as follows.

1) The range of the angle θ formed by the inclined part 193 is in a range of about 5° ≤ θ ≤ about 20°. In other embodiments, angle θ may be in a range from 8° to 17° or in a range from 10° to 15°.

In such an embodiment, the narrower the electrode plate width, the greater the angle of inclination can be applied to reduce damage to the electrode plate. In addition, if an angle smaller than the above range is used, the effect of improving curvature and skew may be reduced due to the reduction in the amount of elongation by the roller. On the other hand, if a higher angle is used, damage to the uncoated part may be intensified, resulting in severe waves or breakage during transfer of the electrode plate.

2) The length $L_1$ of the inclined part 193 is in a range of about 1 mm ≤ $L_1$ ≤ about 3 mm. In other embodiments, the length $L_1$ of the inclined part 193 may be in a range from 1.25 mm to 2.75 mm, more preferably in a range from 1.5 mm to 2.5 mm.

3) The difference between the radius $r_2$ of the first diameter part 191 and the radius $r_1$ of the second diameter part 192 is about 100 μm ≤ $(r_2-r_1)$ ≤ about 350 μm. If the range of this difference in radius is subdivided according to the single-sided coating and double-sided coating of the electrode plate, the roller transferring the double-sided coated electrode plate should exhibit about 150 μm ≤ $(r_2-r_1)$ ≤ about 350 μm, and the roller transferring the single-sided coated electrode plate should exhibit about 100 μm ≤ $(r_2-r_1)$ ≤ about 300 μm. Because the double-sided coated electrode plate is thicker than the single-sided coated electrode plate, $r_2-r_1$ is larger in the former embodiment. In other embodiments, the difference may be in a range from 150 μm to 300 μm, more preferably in a range from 200 μm to 250 μm.

Hereinafter, material(s) that may be usable for the secondary battery according to the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of about 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al), but it is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, $SiO_x$ ($0 < x < 2$), a Si-based alloy, or a combination thereof.

The silicon-carbon composite may be a composite of silicon and amorphous carbon. According to one or more embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. If an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

If a carbonate-based solvent is used, a mixture of cyclic carbonate and chain carbonate may be used.

Depending on the type of lithium secondary battery, a separator may be present between (e.g., arranged between) the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and combinations thereof but is not limited thereto.

The organic material and the inorganic material may be mixed in one coating layer or may be in the form of a coating layer consisting an organic material and a coating layer consisting an inorganic material that are laminated on each other.

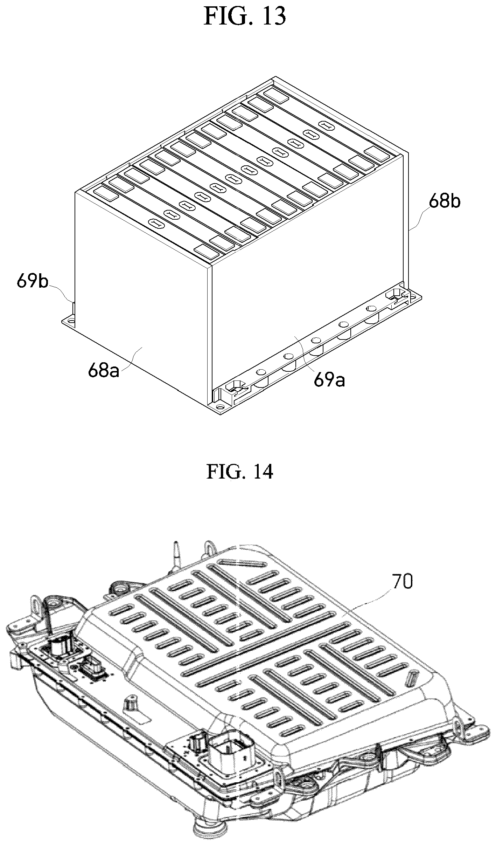

FIG. 13 is a view of a secondary battery module in which prismatic secondary batteries are arranged according to embodiments of the present disclosure. With the increase in secondary battery capacity for driving electric vehicles and the like, a secondary battery module may be manufactured by arranging a plurality of secondary battery cells transversely and/or longitudinally and connecting them together. The plurality of secondary batteries may be arranged in a space defined by a pair of facing/opposite end plates 68a and 68b and a pair of facing/opposite side plates 69a and 69b. The secondary batteries may be provided and configured in both arrangement (e.g., direction) and number to provide desired voltage and current specifications.

FIG. 14 is a view schematically showing the configuration of a battery pack 70 according to embodiments of the present disclosure. Referring to FIG. 14, a battery pack 70 may include an assembly to which individual batteries are electrically connected and a pack housing accommodating the same. In the drawings, for convenience of illustration, some components including a bus bar, a cooling unit, external terminals for electrically connecting batteries, etc., are omitted.

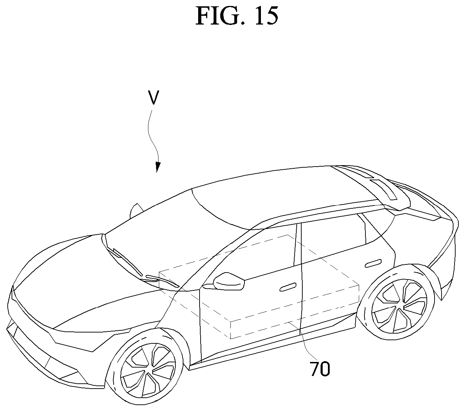

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 15 shows a vehicle V according to embodiments of the present disclosure including the battery pack 70 shown in FIG. 14 on the lower body thereof. The vehicle V may operate by (e.g., may be powered by) receiving power from the battery pack 70.

**Claims**

1. An apparatus for manufacturing secondary battery electrode plates (80, 80a, 80b, 82), the apparatus comprising:

   a coating unit (120) configured to coat an electrode material slurry on a substrate (P1) for an electrode plate;
   a rolling unit (130) configured to roll the coated electrode plate (P2);
   a slitting unit (160) configured to slit the rolled electrode plate (P3) in a moving direction of the rolled electrode plate (P3); and
   a transfer unit (170a, 170b) comprising a roller (171; 171a, 171b, 172a, 172b, 173a, 173b) configured to contact with one of the coated electrode plate (P2), the rolled electrode plate (P3), and the slit electrode plate (80, 80a, 80b) to transfer the corresponding electrode plate (P2, P3, 80, 80a, 80b, 82),
   **characterized in that**,
   the roller (171) has a first diameter part (191) having a first diameter, a second diameter part (192) having a smaller diameter than the first diameter part (191), and an inclined part (193) extending between the first diameter part (191) and the second diameter part (192).

2. The apparatus according to claim 1, wherein the roller (171) is configured to contact with the corresponding electrode plate (80, 82) so that:

   the first diameter part (191) of the roller (171) is in contact with a first thickness part of the electrode plate (80),
   the second diameter part (192) of the roller (171) is in contact with a second thickness part of the electrode plate (80, 82) that is thicker than the first thickness part, and
   the inclined part (193) of the roller (171) is in contact with a boundary part (91, 92) of the electrode plate (80, 82) between the first thickness part and the second thickness part.

3. The apparatus according to claim 2,

   wherein the first thickness part is an uncoated part (95) of the electrode plate (80), and
   wherein the second thickness part is a coated part (90) of the electrode plate (80).

4. The apparatus according to any of the preceding claims 1 to 3, wherein the roller (171) is configured to contact with the corresponding electrode plate (82) so that:

the first diameter part (191) of the roller (171) is in contact with a first thickness part of the electrode plate (82), the second diameter part (192) of the roller (171) is in contact with a second thickness part of the electrode plate (82) that is thicker than the first thickness part, and the inclined part (193) of the roller (171) is in contact with a third thickness part of the electrode plate (82) between the first thickness part and the second thickness part.

5. The apparatus according to claim 4,

wherein the first thickness part is an uncoated part (95) of the electrode plate (82), wherein the second thickness part is a coated part (90) of the electrode plate (82), and wherein the third thickness part is an insulating part (97) of the electrode plate (82).

6. The apparatus according to any of the preceding claims 1 to 5, wherein the inclined part (193) of the roller (171) has an angle (Θ) of inclination in a range from 5° to 20°, preferably in a range from 8° to 17°, more preferably in a range from 10° to 15°.

7. The apparatus according to any of the preceding claims 1 to 6, wherein the inclined part (193) of the roller (171) has a length (L1) in a range from 1 mm to 3 mm, preferably in a range from 1.25 mm to 2.75 mm, more preferably in a range from 1.5 mm to 2.5 mm.

8. The apparatus according to any of the preceding claims 1 to 7, wherein a difference between radii (r1, r2) of the first and second diameter parts (191, 192) of the roller (171) is in a range from 100 $\mu$m to 350 $\mu$m, preferably in a range from 150 $\mu$m to 300 $\mu$m, more preferably in a range from 200 $\mu$m to 250 $\mu$m.

9. The apparatus according to any of the preceding claims 1 to 8, wherein the first and second diameter parts (191, 192) of the roller (171) have a different surface roughness.

10. The apparatus according to any of the preceding claims 1 to 9, wherein the first diameter part (191) of the roller (171) and the second diameter part (192) of the roller (171) are made of different materials.

11. A method of manufacturing secondary battery electrode plates (80, 80a, 80b, 82), the method comprising:

coating an electrode material slurry on a substrate (P1); rolling the coated electrode plate (P2); slitting the rolled electrode plate (P3) in a moving direction of the rolled electrode plate (P3); and transferring, one of the coated electrode plate (P2), the rolled electrode plate (P3), and the slit electrode plate (90, 80a, 80b, 82) with a roller (171; 171a, 171b, 172a, 172b, 173a, 173b) in contact with the corresponding electrode plate (P2, P3, 80, 80a, 80b, 82), **characterized in that**, the roller (171) has a first diameter part (191) having a first diameter, a second diameter part (192) having a smaller diameter than the first diameter part (191), and an inclined part (193) extending between the first diameter part (191) and the second diameter part (192).

12. The method according to claim 11, further comprising the contacting of the roller (171) with the corresponding electrode plate (80, 82) so that:

the first diameter part (191) of the roller (171) is in contact with a first thickness part of the electrode plate (80, 82), the second diameter part (192) of the roller (171) is in contact with a second thickness part of the electrode plate (80, 82) that is thicker than the first thickness part, and the inclined part (193) of the roller (171) is in contact with a boundary part (91, 92) of the electrode plate (80, 82) between the first thickness part and the second thickness part.

13. The method according to claim 12,

wherein the first thickness part is an uncoated part (95) of the slit electrode plate (80, 82), and

wherein the second thickness part is a coated part (90) of the slit electrode plate (80, 82).

14. The method according to any of the preceding claims 11 to 13, further comprising the contacting of the roller (171) with the corresponding electrode plate (80, 82) so that:

the first diameter part (191) of the roller (171) is in contact with a first thickness part of the electrode plate (82), the second diameter part (192) of the roller (171) is in contact with a second thickness part of the electrode plate (82) that is thicker than the first thickness part, and the inclined part (193) of the roller (171) is in contact with a third thickness part of the electrode plate (82) between the first thickness part and the second thickness part.

15. The method according to claim 14,

wherein the first thickness part is an uncoated part (95) of the slit electrode plate (82), wherein the second thickness part is a coated part (90) of the slit electrode plate (82), and wherein the third thickness part is an insulating part (97) of the slit electrode plate (82).

**Patentansprüche**

1. Vorrichtung zur Herstellung von Elektrodenplatten (80, 80a, 80b, 82) für Sekundärbatterien, wobei die Vorrichtung Folgendes umfasst:

eine Beschichtungseinheit (120), die dazu konfiguriert ist, eine Elektrodenmaterialaufschlämmung auf ein Substrat (P1) für eine Elektrodenplatte aufzutragen; eine Walzeinheit (130), die dazu konfiguriert ist, die beschichtete Elektrodenplatte (P2) zu walzen; eine Schneideeinheit (160), die dazu konfiguriert ist, die gewalzte Elektrodenplatte (P3) in einer Bewegungsrichtung der gewalzten Elektrodenplatte (P3) zu schneiden; und eine Übertragungseinheit (170a, 170b) mit einer Rolle (171; 171a, 171b, 172a, 172b, 173a, 173b), die so konfiguriert ist, dass sie mit einer von der beschichteten Elektrodenplatte (P2), der gewalzten Elektrodenplatte (P3) und der geschnittenen Elektrodenplatte (80, 80a, 80b) in Kontakt kommt, um die entsprechende Elektrodenplatte (P2, P3, 80, 80a, 80b, 82) zu übertragen, **dadurch gekennzeichnet, dass** die Rolle (171) einen ersten Durchmesserabschnitt (191) mit einem ersten Durchmesser, einen zweiten Durchmesserabschnitt (192) mit einem kleineren Durchmesser als der erste Durchmesserabschnitt (191) und einen geneigten Abschnitt (193), der sich zwischen dem ersten Durchmesserabschnitt (191) und dem zweiten Durchmesserabschnitt (192) erstreckt, aufweist.

2. Vorrichtung nach Anspruch 1, wobei die Rolle (171) so konfiguriert ist, dass sie mit der entsprechenden Elektrodenplatte (80, 82) in Kontakt kommt, so dass:

der erste Durchmesserabschnitt (191) der Rolle (171) mit einem ersten Dickenabschnitt der Elektrodenplatte (80) in Kontakt steht, der zweite Durchmesserabschnitt (192) der Rolle (171) mit einem zweiten Dickenabschnitt der Elektrodenplatte (80, 82) in Kontakt steht, der dicker ist als der erste Dickenabschnitt, und der geneigte Abschnitt (193) der Rolle (171) mit einem Grenzabschnitt (91, 92) der Elektrodenplatte (80, 82) zwischen dem ersten Dickenabschnitt und dem zweiten Dickenabschnitt in Kontakt steht.

3. Vorrichtung nach Anspruch 2,

wobei der erste Dickenabschnitt ein unbeschichteter Abschnitt (95) der Elektrodenplatte (80) ist, und wobei der zweite Dickenabschnitt ein beschichteter Abschnitt (90) der Elektrodenplatte (80) ist.

4. Vorrichtung nach einem der vorstehenden Ansprüche 1 bis 3, wobei die Rolle (171) so konfiguriert ist, dass sie mit der entsprechenden Elektrodenplatte (82) in Kontakt kommt, so dass:

der erste Durchmesserabschnitt (191) der Rolle (171) mit einem ersten Dickenabschnitt der Elektrodenplatte (82) in Kontakt steht,

der zweite Durchmesserabschnitt (192) der Rolle (171) mit einem zweiten Dickenabschnitt der Elektrodenplatte (82) in Kontakt steht, der dicker ist als der erste Dickenabschnitt, und

der geneigte Abschnitt (193) der Rolle (171) mit einem dritten Dickenabschnitt der Elektrodenplatte (82) zwischen dem ersten Dickenabschnitt und dem zweiten Dickenabschnitt in Kontakt steht.

5. Vorrichtung nach Anspruch 4,

wobei der erste Dickenabschnitt ein unbeschichteter Abschnitt (95) der Elektrodenplatte (82) ist,
wobei der zweite Dickenabschnitt ein beschichteter Abschnitt (90) der Elektrodenplatte (82) ist, und
wobei der dritte Dickenabschnitt ein isolierender Abschnitt (97) der Elektrodenplatte (82) ist.

6. Vorrichtung nach einem der vorstehenden Ansprüche 1 bis 5, wobei der geneigte Abschnitt (193) der Rolle (171) einen Neigungswinkel (0) im Bereich von 5° bis 20°, vorzugsweise im Bereich von 8° bis 17°, noch bevorzugter im Bereich von 10° bis 15° aufweist.

7. Vorrichtung nach einem der vorstehenden Ansprüche 1 bis 6, wobei der geneigte Abschnitt (193) der Rolle (171) eine Länge (L1) im Bereich von 1 mm bis 3 mm, vorzugsweise im Bereich von 1,25 mm bis 2,75 mm, noch bevorzugter im Bereich von 1,5 mm bis 2,5 mm aufweist.

8. Vorrichtung nach einem der vorstehenden Ansprüche 1 bis 7, wobei eine Differenz zwischen den Radien (r1, r2) des ersten und des zweiten Durchmesserabschnitts (191, 192) der Rolle (171) in einem Bereich von 100 $\mu$m bis 350 $\mu$m, vorzugsweise in einem Bereich von 150 $\mu$m bis 300 $\mu$m, noch bevorzugter in einem Bereich von 200 $\mu$m bis 250 $\mu$m liegt.

9. Vorrichtung nach einem der vorstehenden Ansprüche 1 bis 8, wobei der erste und der zweite Durchmesserabschnitt (191, 192) der Rolle (171) eine unterschiedliche Oberflächenrauheit aufweisen.

10. Vorrichtung nach einem der vorstehenden Ansprüche 1 bis 9, wobei der erste Durchmesserabschnitt (191) der Rolle (171) und der zweite Durchmesserabschnitt (192) der Rolle (171) aus unterschiedlichen Materialien hergestellt sind.

11. Verfahren zur Herstellung von Elektrodenplatten (80, 80a, 80b, 82) für Sekundärbatterien, wobei das Verfahren Folgendes umfasst:

Auftragen einer Elektrodenmaterialaufschlämmung auf ein Substrat (P1);
Walzen der beschichteten Elektrodenplatte (P2);
Schneiden der gewalzten Elektrodenplatte (P3) in einer Bewegungsrichtung der gewalzten Elektrodenplatte (P3); und
Übertragen einer von der beschichteten Elektrodenplatte (P2), der gewalzten Elektrodenplatte (P3) und der geschnittenen Elektrodenplatte (90, 80a, 80b, 82) mit einer Rolle (171; 171a, 171b, 172a, 172b, 173a, 173b), die mit der entsprechenden Elektrodenplatte (P2, P3, 80, 80a, 80b, 82) in Kontakt steht,
**dadurch gekennzeichnet, dass**
die Rolle (171) einen ersten Durchmesserabschnitt (191) mit einem ersten Durchmesser, einen zweiten Durchmesserabschnitt (192) mit einem kleineren Durchmesser als der erste Durchmesserabschnitt (191) und einen geneigten Abschnitt (193), der sich zwischen dem ersten Durchmesserabschnitt (191) und dem zweiten Durchmesserabschnitt (192) erstreckt, aufweist.

12. Verfahren nach Anspruch 11, umfassend ferner das Inkontaktbringen der Rolle (171) mit der entsprechenden Elektrodenplatte (80, 82), so dass:

der erste Durchmesserabschnitt (191) der Rolle (171) mit einem ersten Dickenabschnitt der Elektrodenplatte (80, 82) in Kontakt steht,
der zweite Durchmesserabschnitt (192) der Rolle (171) mit einem zweiten Dickenabschnitt der Elektrodenplatte (80, 82) in Kontakt steht, der dicker ist als der erste Dickenabschnitt, und
der geneigte Abschnitt (193) der Rolle (171) mit einem Grenzabschnitt (91, 92) der Elektrodenplatte (80, 82) zwischen dem ersten Dickenabschnitt und dem zweiten Dickenabschnitt in Kontakt steht.

13. Verfahren nach Anspruch 12,

wobei der erste Dickenabschnitt ein unbeschichteter Abschnitt (95) der geschnittenen Elektrodenplatte (80, 82) ist, und

wobei der zweite Dickenabschnitt ein beschichteter Abschnitt (90) der geschnittenen Elektrodenplatte (80, 82) ist.

14. Verfahren nach einem der vorstehenden Ansprüche 11 bis 13, umfassend ferner das Inkontaktbringen der Rolle (171) mit der entsprechenden Elektrodenplatte (80, 82), so dass:

der erste Durchmesserabschnitt (191) der Rolle (171) mit einem ersten Dickenabschnitt der Elektrodenplatte (82) in Kontakt steht,

der zweite Durchmesserabschnitt (192) der Rolle (171) mit einem zweiten Dickenabschnitt der Elektrodenplatte (82) in Kontakt steht, der dicker ist als der erste Dickenabschnitt, und

der geneigte Abschnitt (193) der Rolle (171) mit einem dritten Dickenabschnitt der Elektrodenplatte (82) zwischen dem ersten Dickenabschnitt und dem zweiten Dickenabschnitt in Kontakt steht.

15. Verfahren nach Anspruch 14,

wobei der erste Dickenabschnitt ein unbeschichteter Abschnitt (95) der geschnittenen Elektrodenplatte (82) ist,

wobei der zweite Dickenabschnitt ein beschichteter Abschnitt (90) der geschnittenen Elektrodenplatte (82) ist, und

wobei der dritte Dickenabschnitt ein isolierender Abschnitt (97) der geschnittenen Elektrodenplatte (82) ist.


**Revendications**

1. Appareil de fabrication de plaques d'électrode de batterie secondaire (80, 80a, 80b, 82), l'appareil comportant :

une unité de revêtement (120) configurée pour appliquer par revêtement une suspension de matériau d'électrode sur un substrat (P1) pour une plaque d'électrode ;

une unité de laminage (130) configurée pour laminer la plaque d'électrode revêtue (P2) ;

une unité de refendage (160) configurée pour refendre la plaque d'électrode laminée (P3) dans une direction de déplacement de la plaque d'électrode laminée (P3) ; et

une unité de transfert (170a, 170b) comportant un rouleau (171 ; 171a, 171b, 172a, 172b, 173a, 173b) configurée pour entrer en contact avec l'une parmi la plaque d'électrode revêtue (P2), la plaque d'électrode laminée (P3) et la plaque d'électrode refendue (80, 80a, 80b) pour transférer la plaque d'électrode (P2, P3, 80, 80a, 80b, 82) correspondante,

**caractérisé en ce que**,

le rouleau (171) présente une première partie de diamètre (191) ayant un premier diamètre, une deuxième partie de diamètre (192) ayant un diamètre inférieur à celui de la première partie de diamètre (191) et une partie inclinée (193) s'étendant entre la première partie de diamètre (191) et la deuxième partie de diamètre (192).

2. Appareil selon la revendication 1, dans lequel le rouleau (171) est configuré pour entrer en contact avec la plaque d'électrode (80, 82) correspondante de sorte que :

la première partie de diamètre (191) du rouleau (171) soit en contact avec une première partie d'épaisseur de la plaque d'électrode (80),

la deuxième partie de diamètre (192) du rouleau (171) soit en contact avec une deuxième partie d'épaisseur de la plaque d'électrode (80, 82) qui est plus épaisse que la première partie d'épaisseur, et

la partie inclinée (193) du rouleau (171) soit en contact avec une partie limite (91, 92) de la plaque d'électrode (80, 82) entre la première partie d'épaisseur et la deuxième partie d'épaisseur.

3. Appareil selon la revendication 2,

dans lequel la première partie d'épaisseur est une partie non revêtue (95) de la plaque d'électrode (80), et

dans lequel la deuxième partie d'épaisseur est une partie revêtue (90) de la plaque d'électrode (80).

4. Appareil selon l'une quelconque des revendications 1 à 3 précédentes, dans lequel le rouleau (171) est configuré pour entrer en contact avec la plaque d'électrode (82) correspondante de sorte que :

la première partie de diamètre (191) du rouleau (171) soit en contact avec une première partie d'épaisseur de la plaque d'électrode (82),
la deuxième partie de diamètre (192) du rouleau (171) soit en contact avec une deuxième partie d'épaisseur de la plaque d'électrode (82) qui est plus épaisse que la première partie d'épaisseur, et
la partie inclinée (193) du rouleau (171) soit en contact avec une troisième partie d'épaisseur de la plaque d'électrode (82) entre la première partie d'épaisseur et la deuxième partie d'épaisseur.

5. Appareil selon la revendication 4,

dans lequel la première partie d'épaisseur est une partie non revêtue (95) de la plaque d'électrode (82),
dans lequel la deuxième partie d'épaisseur est une partie revêtue (90) de la plaque d'électrode (82), et
dans lequel la troisième partie d'épaisseur est une partie isolante (97) de la plaque d'électrode (82).

6. Appareil selon l'une quelconque des revendications 1 à 5 précédentes, dans lequel la partie inclinée (193) du rouleau (171) présente un angle (Θ) d'inclinaison dans une plage de 5° à 20°, de préférence dans une plage de 8° à 17°, plus préférentiellement dans une plage de 10° à 15°.

7. Appareil selon l'une quelconque des revendications 1 à 6 précédentes, dans lequel la partie inclinée (193) du rouleau (171) présente une longueur (L1) dans une plage de 1 mm à 3 mm, de préférence dans une plage de 1,25 mm à 2,75 mm, de manière davantage préférée dans une plage de 1,5 mm à 2,5 mm.

8. Appareil selon l'une quelconque des revendications 1 à 7 précédentes, dans lequel une différence entre des rayons (r1, r2) des première et deuxième parties de diamètre (191, 192) du rouleau (171) est dans une plage de 100 $\mu$m à 350 $\mu$m, de préférence dans une plage de 150 $\mu$m à 300 $\mu$m, plus préférentiellement dans une plage de 200 $\mu$m à 250 $\mu$m.

9. Appareil selon l'une quelconque des revendications 1 à 8 précédentes, dans lequel les première et deuxième parties de diamètre (191, 192) du rouleau (171) présentent une rugosité de surface différente.

10. Appareil selon l'une quelconque des revendications 1 à 9 précédentes, dans lequel la première partie de diamètre (191) du rouleau (171) et la deuxième partie de diamètre (192) du rouleau (171) sont constituées de matériaux différents.

11. Procédé de fabrication de plaques d'électrodes de batterie secondaire (80, 80a, 80b, 82), le procédé comportant :

l'application par revêtement d'une suspension de matériau d'électrode sur un substrat (P1) ;
le laminage de la plaque d'électrode revêtue (P2) ;
le refendage de la plaque d'électrode laminée (P3) dans une direction de déplacement de la plaque d'électrode laminée (P3) ; et
le transfert de l'une parmi la plaque d'électrode revêtue (P2), la plaque d'électrode laminée (P3) et la plaque d'électrode refendue (90, 80a, 80b, 82) avec un rouleau (171 ; 171a, 171b, 172a, 172b, 173a, 173b) en contact avec la plaque d'électrode (P2, P3, 80, 80a, 80b, 82) correspondante,
**caractérisé en ce que**,
le rouleau (171) présente une première partie de diamètre (191) ayant un premier diamètre, une deuxième partie de diamètre (192) ayant un diamètre inférieur à celui de la première partie de diamètre (191) et une partie inclinée (193) s'étendant entre la première partie de diamètre (191) et la deuxième partie de diamètre (192).

12. Procédé selon la revendication 11, comportant en outre la mise en contact du rouleau (171) avec la plaque d'électrode (80, 82) correspondante de sorte que :

la première partie de diamètre (191) du rouleau (171) soit en contact avec une première partie d'épaisseur de la plaque d'électrode (80, 82),
la deuxième partie de diamètre (192) du rouleau (171) soit en contact avec une deuxième partie d'épaisseur de la plaque d'électrode (80, 82) qui est plus épaisse que la première partie d'épaisseur, et
la partie inclinée (193) du rouleau (171) soit en contact avec une partie limite (91, 92) de la plaque d'électrode (80, 82) entre la première partie d'épaisseur et la deuxième partie d'épaisseur.

13. Procédé selon la revendication 12,

dans lequel la première partie d'épaisseur est une partie non revêtue (95) de la plaque d'électrode (80, 82) refendue, et
dans lequel la deuxième partie d'épaisseur est une partie revêtue (90) de la plaque d'électrode (80, 82) refendue.

**14.** Procédé selon l'une quelconque des revendications 11 à 13 précédentes, comportant en outre la mise en contact du rouleau (171) avec la plaque d'électrode (80, 82) correspondante de sorte que :

la première partie de diamètre (191) du rouleau (171) soit en contact avec une première partie d'épaisseur de la plaque d'électrode (82),
la deuxième partie de diamètre (192) du rouleau (171) soit en contact avec une deuxième partie d'épaisseur de la plaque d'électrode (82) qui est plus épaisse que la première partie d'épaisseur, et
la partie inclinée (193) du rouleau (171) soit en contact avec une troisième partie d'épaisseur de la plaque d'électrode (82) entre la première partie d'épaisseur et la deuxième partie d'épaisseur.

**15.** Procédé selon la revendication 14,

dans lequel la première partie d'épaisseur est une partie non revêtue (95) de la plaque d'électrode (82) refendue,
dans lequel la deuxième partie d'épaisseur est une partie revêtue (90) de la plaque d'électrode (82) refendue, et
dans lequel la troisième partie d'épaisseur est une partie isolante (97) de la plaque d'électrode (82) refendue.

FIG. 1

# FIG. 2

## FIG. 3

# FIG. 4

# FIG. 5

## FIG. 6

## FIG. 7

## FIG. 8

## FIG. 9

## FIG. 10

## FIG. 11

## FIG. 12

FIG. 13

68b

69b

68a

69a

FIG. 14

70

FIG. 15

**REFERENCES CITED IN THE DESCRIPTION**

**Patent documents cited in the description**

- DE 102021210784 A
- WO 2023085796 A1
- DE 102021206617 B3
- JP 2022139918 A